# EUROPEAN PATENT SPECIFICATION

(11) **EP 1 919 020 B1**
(45) Date of publication and mention of the grant of the patent: **29.12.2010**
(21) Application number: 07115524.6
(22) Date of filing: 03.09.2007
(51) Int. Cl.: H01M 8/04

(54) **Apparatus for supplying water in a fuel cell system**
Vorrichtung zur Wasserzufuhr in ein Brennstoffzellensystem
Appareil pour la fourniture d'eau dans un système de pile à combustible

(30) Priority: 03.11.2006 KR 20060108235
(43) Date of publication of application: 07.05.2008
(73) Proprietor: Samsung SDI Co., Ltd., Gyeonggi-do (KR)
(72) Inventor: Han, Man-Seok, Kyunggi-do (KR); Kim, Ju-Yong, Kyunggi-do (KR); Lee, Chan-ho, Kyunggi-do (KR); Lee, Sung-Chul, Kyunggi-do (KR); Lee, Yong-Kul, Kyunggi-do (KR); Lee, Dong-Uk, Kyunggi-do (KR); Kim, Jin-Kwang, Kyunggi-do (KR); Ahn, Jin-Goo, Kyunggi-do (KR); Gorobinskiy, Leonid, Kyunggi-do (KR)
(74) Representative: Grey, Ian Michael

(56) References cited:
- EP-A- 1 513 208
- WO-A-2006/064976
- DE-A1- 19 913 977
- JP-A- 2004 281 340
- US-A1- 2002 000 385
- US-A1- 2004 131 903
- US-A1- 2005 019 641
- US-A1- 2005 130 009
- US-B1- 6 572 994

## Description

The present invention relates to a fuel cell system.

As well known, a fuel cell is an electricity generating system for generating electric energy by using a fuel and an oxidant gas. Fuel cells are generally classified into a polymer electrolyte membrane fuel cell and a direct oxidation membrane fuel cell. A system employing the polymer electrolyte membrane fuel cell includes a fuel cell main body, a reformer for reforming a fuel and water to generate a reformed gas and supplying the reformed gas to the fuel cell main body, a fuel tank for supplying the fuel to the reformer, and a water tank for supplying water to the reformer.

However, fuel cell systems generally include a pump for supplying the water to the reformer. Therefore, there are problems in that, the compact and lightweight system cannot be easily implemented, and noises may occur. In addition, electricity is consumed to drive the pump. Therefore, an efficiency of the entire system may decrease.

It is known from US 2005/019641 A1 to provide a fuel cell system comprising a generator, a reformer for generating a reformed gas by reforming gaseous fuel and water and for supplying the reformed gas to the generator and, a fuel tank for storing the gaseous fuel in a liquid state by compressing the gaseous fuel and supplying the gaseous fuel to the reformer.

A fuel cell system according to the invention is **characterised in that** the system further comprises a container of substantially constant volume receiving water to be supplied to the reformer and fuel from the fuel tank, the container having a separator, positioned between and in contact with fuel and water in the container so as to transmit the pressure of the fuel to the water so that water flows from the container to the reformer, wherein the system includes a condenser for condensing steam discharged from the generator into water, said condenser being connected to the container to supply condensed water to the water in the container.

In the foregoing apparatus, the container may comprise a water opening, through which the water can flow in or out of the container, and wherein the container may comprise a fuel opening, through which the fuel can flow in or out of the container. The fuel opening may be connected to a fuel supply. The separator may partition between the water and the fuel substantially throughout so as to avoid contact between the water and the fuel. At least a portion of the fuel may be in the gaseous phase in the container. The fuel may comprise at least one compound selected from the group consisting of methane, ethane, propane, butane, pentane, hexane, heptane, octane, ethylene, propylene, butylene, and acetylene. The fuel may be positioned above the water. The separator may comprise a layer of a material floating on the water.

Still in the foregoing apparatus, the separator may comprise a liquid layer. The separator may comprise a liquid material which is substantially not miscible with the fuel nor the water. The separator may comprise a liquid material which has a specific gravity of from about 0.5 to about 0.9. The separator may comprise a liquid material comprising at least one oil selected from the group of cottonseed oil, linseed oil, olive oil, canola oil, soybean oil, sunflower oil, corn oil, perilla oil, safflower oil, rice bran oil, high oleic acid safflower oil, and cottonseed stearin oil. The separator may comprise a first surface facing to the water and a second surface facing to the fuel, wherein a distance between the first surface and the second surface is about 3 mm to about 8 mm. The separator may comprise a substantially flexible film.

Further in the foregoing apparatus, the separator may comprise a liquid material, wherein the apparatus may further comprise a valve connected to the water opening and configured to stop flowing the water via the water opening so as to prevent the liquid material from flowing out of the container. The water may be configured to flow out of the container through the water opening as the fuel occupies more space within the container. The fuel may occupy less space within the container as the water flows in of the container through the water opening. The apparatus may be selected from the group consisting of a fuel/water supplier for use in a fuel cell system, a fuel reformer for use in a fuel cell system, a fuel cell system, a fuel cell module, an electronic or electrical device comprising a fuel cell system or module, and a transportation vehicle comprising a fuel cell system or module.

Another aspect of the invention provides a method of controlling the supply of water to a reformer in a fuel cell system, the method comprising providing a container of substantially constant volume containing water and fuel and separated by a separator between and in contact with the fuel and water in the container and flowing fuel into the container such that it pushes against the water via the separator to cause the water to flow out of the container to a reformer, the method further comprising the step of condensing steam discharged form the generator and supplying said condensed water to the water in the container.

The water supply device may include a water level sensor disposed in the container for measuring water level of the water. The water supply device may include a tilt sensor disposed in the container for measuring tilt of the container. The fuel cell system may further includes: a valve disposed at a connecting line for connecting the reformer and the water supply device to selectively open and close the connecting line; and a control unit for controlling opening and closing operations of the valve according to measured signals received from the water level sensor. In this case, the control unit may control opening and closing operations of the valve according to measured signals received from the water level sensor and the tilt sensor.

The gaseous fuel discharged from the fuel tank and the water discharged from the container may be joined and supplied to the reformer. The fuel cell system may further include a mixer which is disposed at a confluence of the gaseous fuel and the water to mix the gaseous fuel and the water. In this case, the mixer may be a venturi tube. The fuel cell system may further include a heater which contacts the fuel tank to supply heat to the fuel tank. In this case, the heater may include a heat coil for generating heat by using electric resistance.

The fuel cell system may further include a vapor-liquid separation layer which is disposed at a point of a connecting line for connecting the fuel tank and the container by the side of the container. The fuel cell system may further include an oxidant gas supply unit connected to the generator for supplying an oxidant gas to the generator. The gaseous fuel may be selected from the group consisting of methane, ethane, propane, and butane..

The above and other aspects, features and advantages of the present invention will become more apparent by describing in detail exemplary embodiments thereof with reference to the attached drawings in which:
FIG. 1 is a schematic block diagram showing an entire structure of a fuel cell system according to an embodiment of the present invention;
FIG. 2 is a sectional view showing a structure of a water supply device shown in FIG. 1;
FIG. 3 is a schematic block diagram showing a structure of a fuel cell system according to an embodiment of the present invention;
operations of the valve according to measured signals received from the water level sensor and the tilt sensor.

The gaseous fuel discharged from the fuel tank and the water discharged from the container may be joined and supplied to the reformer. The fuel cell system may further include a mixer which is disposed at a confluence of the gaseous fuel and the water to mix the gaseous fuel and the water. In this case, the mixer may be a venturi tube. The fuel cell system may further include a heater which contacts the fuel tank to supply heat to the fuel tank. In this case, the heater may include a heat coil for generating heat by using electric resistance.

The fuel cell system may further include a vapor-liquid separation layer which is disposed at a point of a connecting line for connecting the fuel tank and the container by the side of the container. The fuel cell system may further include a condenser connected to the generator for condensing steam discharged from the generator. In this case, the water supply device and the condenser are connected by a recovery line for recovering condensed water to transfer the condensed water to the water supply device. The fuel cell system may further include an oxidant gas supply unit connected to the generator for supplying an oxidant gas to the generator. The gaseous fuel may be selected from the group consisting of methane, ethane, propane, and butane.

The above and other aspects, features and advantages of the present invention will become more apparent by describing in detail exemplary embodiments thereof with reference to the attached drawings in which:

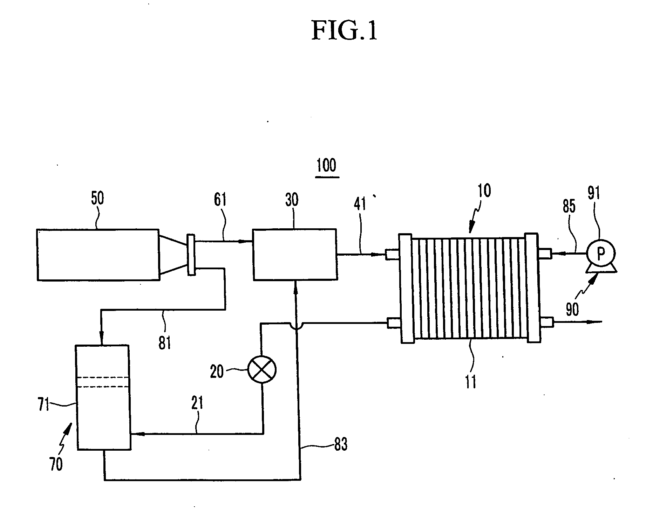

FIG. 1 is a schematic block diagram showing an entire structure of a fuel cell system according to an embodiment of the present invention;

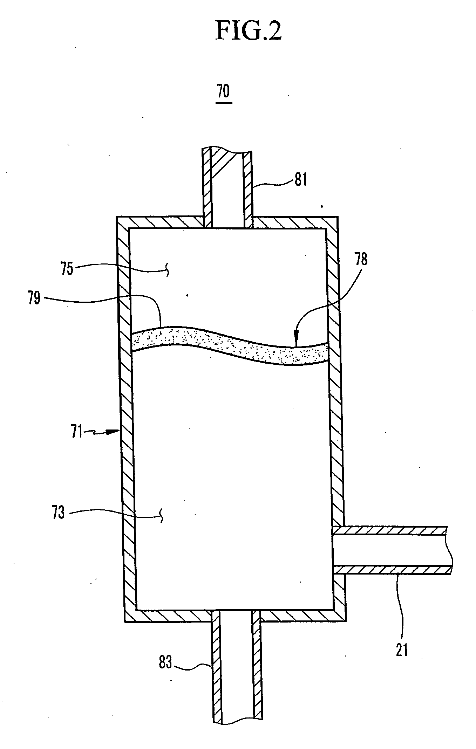

FIG. 2 is a sectional view showing a structure of a water supply device shown in FIG. 1;

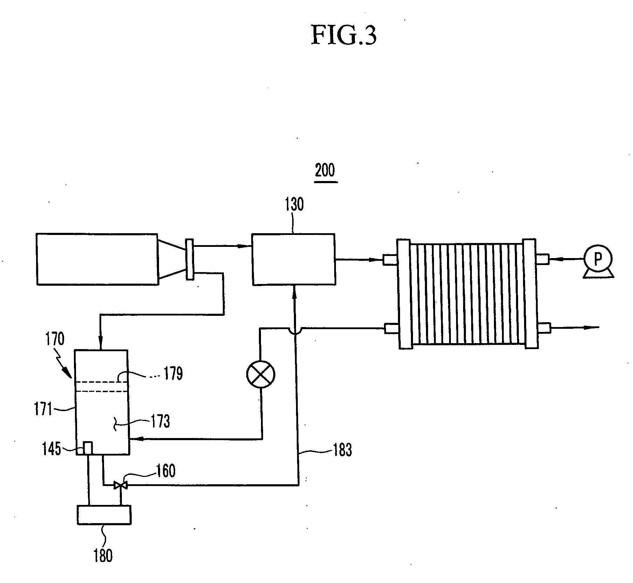

FIG. 3 is a schematic block diagram showing a structure of a fuel cell system according to an embodiment of the present invention;

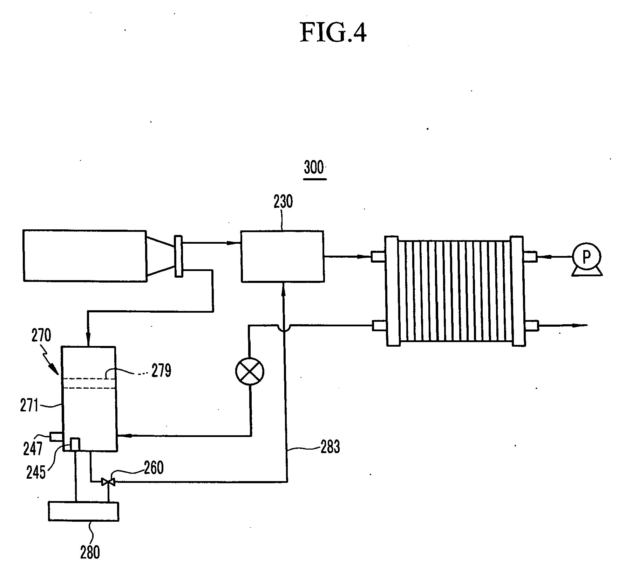

FIG. 4 is a schematic block diagram showing a structure of a fuel cell system according to an embodiment of the present invention;

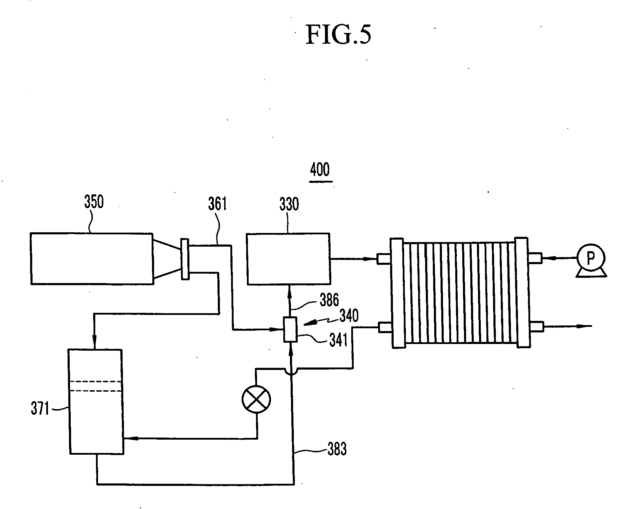

FIG. 5 is a schematic block diagram showing a structure of a fuel cell system according to an embodiment of the present invention;

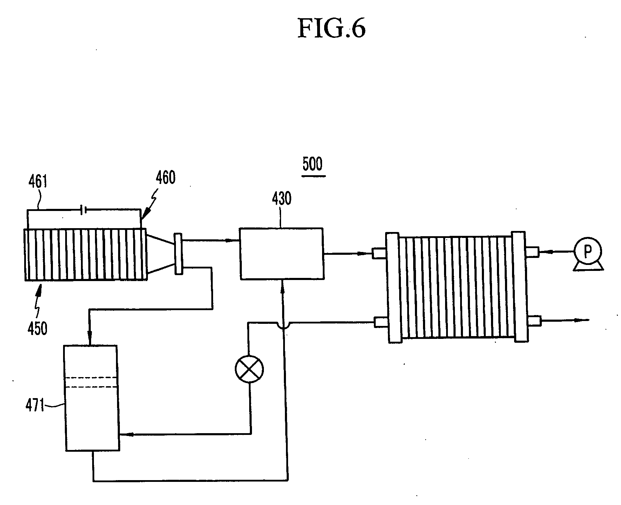

FIG. 6 is a schematic block diagram showing a structure of a fuel cell system according to an embodiment of the present invention; and

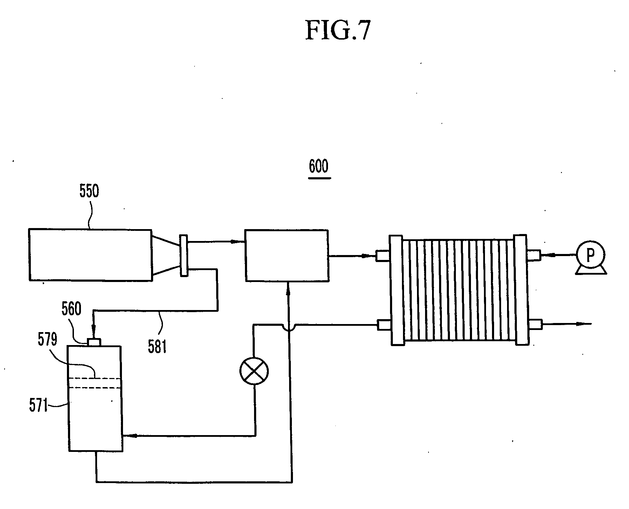

FIG. 7 is a schematic block diagram showing a structure of a fuel cell system according to an embodiment of the present invention.

Hereinafter, exemplary various embodiments of the present invention will be described in detail with reference to the attached drawings such that the present invention can be easily put into practice by those skilled in the art. However, the present invention is not limited to the exemplary embodiments, but may be embodied in various forms.

FIG. 1 is a schematic block diagram showing an entire structure of a fuel cell system according to an embodiment of the present invention. Referring to FIG. 1, a fuel cell system 100 according to the illustrated embodiment of the present invention is constructed with an electricity generating system for generating electric energy by using a fuel and an oxidant gas and may be used as a portable power supply. The system 100 is constructed by a polymer electrolyte membrane fuel cell scheme which generates a reformed gas abundant in hydrogen by reforming the fuel and generates electric energy by an oxidation reaction of the reformed gas and a reduction reaction of the oxidant gas. The fuel may contain a liquid fuel such as methanol and ethanol. However, in the illustrated embodiments and other certain embodiments, a gaseous fuel which can be compressed to be stored in a liquid state in a predetermined container and exists in a gas state at a normal temperature can be used. The gaseous fuel may be a hydrocarbon fuel such as natural gas, LPG, LNG, butane and any other mixture thereof.

In an embodiment of the present invention, the portable fuel cell system which can be used as a movable power supply is exemplified, so that the butane is used as the gaseous fuel. The butane fuel is in a gas state at a normal temperature, but stored in a liquid state inside the container to be sold in the market. Therefore, the butane may be suitable for the fuel of the portable fuel cell. In the above embodiments and certain embodiments, the butane fuel may be made of a mixture of propane and butane at a ratio of from about 1:9 to about 1:1. More specifically, since the boiling point of normal butane (n-butane) is about -0.5 °C, n-butane cannot be easily vaporized in winter or in a space at low temperatures. Therefore, the butane fuel may be made of a mixture of iso-butane having a boiling point of -11.5 °C and propane having a boiling point of -42 °C.

In the illustrated embodiment, the fuel cell system 100 mainly includes a generator 10, a reformer 30, a fuel tank 50, a water supply device 70, and an oxidant gas supply unit 90. The generator 10 is connected to the reformer 30 and the oxidant gas supply unit 90. The generator 10 is supplied with a reformed gas from the reformer 30 and is supplied with an oxidant gas from the oxidant gas supply unit 90. The generator 10 includes electricity generators 11 in units of cell for generating electric energy by an electro-chemical reaction of the reformed gas and the oxidant gas. Therefore, the generator 10 according to the embodiment includes a plurality of the electricity generators 11 which are sequentially disposed to form a stacked structure of the electricity generators 11.

The reformer 30 generates a reformed gas containing hydrogen from the fuel by a reforming reaction such as a steam reforming reaction, a partial oxidation reaction, and an auto-thermal reaction. The reformer 30 may be called a fuel processor in the art. In the above embodiments and other embodiments, the reformer 30 is constructed to generate a reformed gas by the steam reforming reaction of the fuel and the water. The reformer 30 is connected to the generator 10 with a first connecting line 41. The reformer 30 supplies the reformed gas to the generator 10 through the first connecting line 41. The fuel tank 50 stores the fuel which is compressed to be in a liquid state and is a can-shaped container for discharging the fuel by an internal pressure of the fuel tank 50, and such discharge may not depend on an additional pump. The fuel tank 50 is connected to the reformer 30 with a second connecting line 61 and supplies the fuel to the reformer 30 through the second connecting line. In the above and other embodiments, the fuel tank 50 may be detachable from a case (not shown in the figure) forming an outer appearance of the system 100. In this case, the fuel stored in the fuel tank 50 may include an odorizer containing a sulfur-based material. Accordingly, the second connecting line 61 may be provided with a desulfurizer (not shown in the figure) having a structure for removing the odorizer included in the fuel.

In the illustrated embodiment, the water supply device 70 stores water and supplies the water to the reformer 30. The water supply device 70 is constructed to receive the fuel from the fuel tank 50 and discharge water by a pressure of the fuel not by an additional pump. Therefore, the water supply device 70 includes a container 71 having a storage space of a predetermined volume capable of storing the water and the fuel. The container 71 is connected to the fuel tank 50 with a third connecting line 81 and is connected to the reformer 30 with a fourth connecting line 83. The container 71 is the storage space constructed to be filled with the water. In addition, the container 71 may be constructed to be detachable from the case forming the outer appearance of the system 100 using a cartridge scheme.

In the water supply device 70, the container 71 includes a water accommodating portion 73 for accommodating the water and a fuel accommodating portion 75 for accommodating the fuel as shown in FIG. 2. In this case, the container 71 has a structure in which the fuel accommodating portion 75 is disposed on the water accommodating portion 73. The third connecting line 81 is connected with the fuel accommodating portion 75, and the fourth connecting line 83 is connected with the water accommodating portion 73.

The oxidant gas supply unit 90 supplies air as the oxidant gas to the generator 10. The oxidant gas supply unit 90 includes an air pump 91 having a structure for sucking air and transferring the air to the generator 10. The air pump 91 is connected to the generator 10 with a fifth connecting line 85. The generator 10 discharges moisture in a steam state in the course of generating electric energy by a reaction of the reformed gas and the oxidant gas.

Here, the fuel cell system 100 according to the embodiment further includes a condenser 20 for condensing the steam discharged from the generator 10. The condenser 20 is a heat exchange device for condensing high temperature steam discharged from the generator 10 into water by cooling the steam and is connected to the generator 10. The condenser 20 has a structure including a pipe in which the steam flows and a cooling air is circulated to condense the steam into water. Here, the condenser 20 is connected to the container 71 of the water supply device 70 with a recovery line 21 having a shape of a pipe. In this case, the recovery line 21 is connected with the water accommodating portion 73 of the container 71 (see FIG. 2) Therefore, the steam discharged from the generator 10 passes through the condenser 20 to be condensed into water, and the water is introduced into the water accommodating portion 73 of the container 71 through the recovery line 21.

When the fuel cell system 100 is operated, the fuel stored in the fuel tank 50 is supplied to the fuel accommodating portion 75 of the container 71. Thereafter, the water accommodated into the water accommodating portion 73 of the container 71 is discharged by a pressure of the fuel applied to the fuel accommodating portion 75. In the meanwhile, a portion of the fuel accommodated into the fuel accommodating portion 75 maintains a liquid state under a predetermined pressure, so that the portion in a liquid state may dissolve in the water. When the portion in a liquid state is passed through the third connecting line 81 along with the water, the portion may be vaporized inside the third connecting line, so that bubbles may be generated. In addition, the vaporized portion may dissolve in the water in the container 71, so that bubbles may be generated. As a result, the water supply device 70 cannot discharge the water in a quantity corresponding to the pressure of the fuel applied to the fuel accommodating portion 75.

Accordingly, the water supply device 70 according to the embodiment is provided with a separation layer 78 formed in the container 71 as shown in FIG. 2. The separation layer 78 has a function of blocking a contact of the fuel with the water accommodated into the container 71 and transmitting the pressure of the fuel accommodated into the fuel accommodating portion 75 to the water. The separation layer 78 is to partition the water accommodating portion 73 and the fuel accommodating portion 75 of the container 71. The separation layer 78 may be an oil layer 79 formed on the surface of the water contacting the fuel. In the embodiment, the oil layer 79 may be made of an organic oil having a property of relatively easily dissolving in a nonpolar solvent such as ether, benzene, acetone, and carbon tetrachloride. The organic oil is harmless to a human body, does not evaporate at a normal temperature, and is viscous. In addition, the organic oil has a greater specific gravity than the fuel and a smaller specific gravity than the water such that the organic oil is separated from the water and floats on the water. The specific gravity of the organic oil may be in a range from about 0.1 to about 0.99, preferably from about 0.5 to about 0.9. In the embodiment, when the butane is used as the fuel, a specific gravity of the butane may be about 0.58, and a specific gravity of the organic oil may be about 0.85. More specifically, the organic oil of the oil layer 79 used in the embodiment may be cottonseed oil, linseed oil, olive oil, canola oil, soybean oil, sunflower oil, corn oil, perilla oil, safflower oil, rice bran oil, high oleic acid safflower oil, or cottonseed stearin oil.

According to the fuel cell system 100 constructed as described above, the fuel stored in the fuel tank 50 is supplied to the reformer 30 through the second connecting line 61. Here, the fuel is compressed to be stored in a liquefied state in the fuel tank 50, so that the fuel is vaporized by absorbing heat from around the fuel tank 50 and is discharged by an internal pressure of the fuel tank 50.

At the same time, a portion of the fuel stored in the fuel tank 50 is supplied to the fuel accommodating portion 75 in the container 71 through the third connecting line 81. Thereafter, the fuel is accommodated into the fuel accommodating portion 75 and produces a pressure in the fuel accommodating portion 75. In this case, the water is in a state that accommodated into the water accommodating portion 73 in the container 71, and the water accommodating portion 73 and the fuel accommodating portion 75 are in a state that partitioned by the oil layer 79. The oil layer 79 floats on the surface of the water and blocks the contact of the fuel with the water.

In this case, the pressure of the fuel applied to the fuel accommodating portion 75 is transmitted to the oil layer 79. Therefore, the water accommodated into the water accommodating portion 73 is applied with the pressure of the fuel through the oil layer 79. The water is then discharged from the container 71 by the pressure of the fuel to be supplied to the reformer 30 through the fourth connecting line 83.

In the above discussed and other embodiments, since the fuel and the water in the container 71 are separated from each other by the oil layer 79, the fuel and the water do not directly contact each other, and bubbles generated by the contact of the fuel with the water are prevented from being generated.

Consequently, the water supply device 70 according to the embodiment can discharge water in a quantity corresponding to the pressure of the fuel applied to the fuel accommodating portion 75.

In the meanwhile, the fuel being supplied to the reformer 30 through the second connecting line 61 and the water being supplied to the reformer 30 through the fourth connecting line 83 may be passed through a confluence line (not shown) and mixed with each other. The reformer 30 generates a reformed gas containing hydrogen by the steam reforming reaction of the fuel and the water and supplies the reformed gas to the generator 10 through the first connecting line 41. At the same time, the air pump 91 sucks air and supplies the air to the generator 10 through the fifth connecting line 85. Therefore, the generator 10 outputs electric energy of a predetermined capacity by an electro-chemical reaction by the electricity generators 11, that is, by an oxidation reaction of the hydrogen contained in the reformed gas and a reduction reaction of the oxygen contained in the air. In the meanwhile, the generator 10 discharges the moisture in a steam state generated by the reduction reaction of the oxygen. The steam then passes through the condenser 20 and is condensed into water, and the water is introduced into the water accommodating portion 73 of the container 71 through the recovery line 21.

FIG. 3 is a schematic block diagram showing a structure of a fuel cell system according to an embodiment of the present invention. Referring to FIG. 3, a fuel cell system 200 according to the illustrated embodiment has basically the same structure as the aforementioned fuel cell system 100 according to the above discussed embodiment. Particularly, in the embodiment, the water supply device 170 may have a water level sensor 145 for measuring water level of the water accommodated into the container 171. In addition, the system 200 further includes a valve 160 which is disposed at the fourth connecting line 183 for connecting the container 171 and the reformer 130 and a control unit 180 for controlling operations of the valve 160 according to measured signals of the water level sensor 145.

The water level sensor 145 is disposed at the water accommodating portion 173 in the container 171. The water level sensor 145 has a structure for measuring water level of the water accommodated into the container 171 by using electric resistance or the like. The valve 160 may be a solenoid valve for selectively opening and closing the pipe of the fourth connecting line 183 by an electric signal. The control unit 180 may be a microcomputer for receiving the measured signals from the water level sensor 145, converting the measured signals into electric control signals, and applying the control signals to the valve 160. When the water in the container 171 discharges such that water level becomes lower than a predetermined level, the organic oil of the oil layer 179 is introduced into the reformer 130 through the fourth connecting line 183, so that the reformer may be contaminated by the organic oil. Therefore, in order to prevent the aforementioned problem, the system 200 is constructed with the water level sensor 145 and the valve 160 as described above.

According to the fuel cell system 200, similarly to the operations in the aforementioned embodiment, while water is discharged from the container 171, the water level sensor 145 measures water level of the water accommodated into the water accommodating portion 173 of the container 171 and provides a measured signal to the control unit 180.

In the meanwhile, when the water level of the water accommodated into the water accommodating portion 173 becomes lower than a predetermined level, the control unit 180 receives the corresponding measured signal from the water level sensor 145 and converts the measured signal into an electric control signal (OFF signal) to apply the control signal to the valve 160. Thereafter, the valve 160 is controlled by the control signal and closes the pipe of the fourth connecting line 183. Therefore, in this embodiment, although water level of the water accommodated into the water accommodating portion 173 becomes lower than the predetermined level, the valve 160 closes the fourth connecting line 183, so that the organic oil of the oil layer 179 is not introduced into the reformer 130 through the fourth connecting line 183. On the contrary, when water level exceeds a predetermined level while water fills the water accommodating portion 173, the control unit 180 receives a corresponding measured signal from the water level sensor 145 and converts the measured signal into an electric control signal (ON signal) and applies the control signal to the valve 160. The valve 160 is then controlled by the control signal and opens the pipe of the fourth connecting line 183. Since other components and operations of the fuel cell system 200 according to the embodiment are the same as those of the aforementioned fuel cell system 100 according to the above discussed embodiment, detailed description thereof is omitted.

FIG. 4 is a schematic block diagram showing a structure of a fuel cell system according to an embodiment of the present invention. Referring to FIG. 4, the fuel cell system 300 according to the embodiment has basically the same structure as the aforementioned fuel cell systems 100 and 200 according to the above discussed embodiments. Particularly, in the embodiment, the water supply device 270 may have a tilt sensor 247 for measuring tilt of the container 271. In this case, the system 300 also includes the water level sensor 245, the valve 260, and the control 280. Therefore, the structures of the valve 260 and the water level sensor 245 are the same as those in the above discussed embodiment, so that detailed description thereof is omitted.

In the embodiment, the control unit 280 receives measured signals from the water level sensor 245 and the tilt sensor 247, respectively, converts the measured signals into electric control signals, and applies the control signals to the valve 260. The tilt sensor 247 is disposed on the outer surface of the container 271. The tilt sensor 247 has a structure for setting a zero-point in a horizontal state of the container 271 and measuring varying values with respect to the zero-point according to the tilt of the container 271. When the system 300 is rotated such that the container 271 is not in a normal state, the organic oil of the oil layer 279 may be introduced into the reformer 230 through the fourth connecting line 283. Therefore, in order to prevent the aforementioned problem, the system 300 employs the tilt sensor 247 as described above.

According to the fuel cell system 300 having the aforementioned construction, similarly to the operations in the aforementioned embodiment, while water is discharged from the container 271, the control unit 280 receives measured signals from the water level sensor 245 and applies the electric controls signals corresponding to the measured signals to the valve 260 similarly to the operations in the above discussed embodiment. Thereafter, the valve 260 selectively opens and closes the pipe of the fourth connecting line 283 according to the control signals. At the same time, the tilt sensor 247 measures tilt of the container 271 and provides a measured signal to the control unit 280. In the meanwhile, when the container 271 is not in a normal state, the control unit 280 receives a corresponding measured signal from the tilt sensor 247 and converts the measured signal into electric control signal and applies the control signal to the valve 260. The valve 260 is then operated by the control signal to close the pipe of the fourth connecting line 283.

Therefore, in the embodiment, although the construction state of the container 271 is not normal, the valve 260 closes the fourth connecting line 283, so that the organic oil of the oil layer 279 is not introduced into the reformer 230 through the fourth connecting line 283. Accordingly, in the embodiment, the organic oil is prevented from being introduced into the reformer 230, so that it is possible to prevent the reformer 230 from being contaminated by the organic oil. On the contrary, when the construction state of the container 271 is normal, the control unit 280 receives a corresponding measured signal from the tilt sensor 247 and converts the measured signal to an electric control signal (ON signal) and applies the control signal to the valve 260. The valve 260 is then operated by the control signal to open the pipe of the fourth connecting line 283. Since other components and operations of the fuel cell system 300 according to the embodiment are the same as those of the aforementioned fuel cell system 100 according to the aforementioned embodiment, detailed description thereof is omitted.

FIG. 5 is a schematic block diagram showing a structure of a fuel cell system according to an embodiment of the present invention. Referring to FIG. 5, the fuel cell system 400 according to the embodiment has basically the same structure as the aforementioned fuel cell system 100 according to the above discussed embodiment. Particularly, in the embodiment, the fuel discharged from the fuel tank 350 and the water discharged from the container 371 are joined and supplied to the reformer 330. Therefore, the system 400 further includes a mixer 340 which is disposed at a confluence of the water and the fuel. The mixer 340 is connected to the fuel tank 350 through the second connecting line 361, is connected to the container 371 through the fourth connecting line 383, and is connected to the reformer 330 through a sixth connecting line 386. In the embodiment, the mixer 340 includes a venturi tube in which pressure of a fluid in the tube drops. The venturi tube has a structure in which a cross-section is reduced to be minimum cross-section at the center, and then gradually enlarged. Therefore, according to the embodiment, the fuel discharged from the fuel tank and the water discharged from the container 371 are supplied to the venturi tube 341 through the second connecting line 361 and the fourth connecting line 383, respectively. Accordingly, in the embodiment, the fuel and the water can be easily mixed with each other by using pressure drop of the fuel and the water in the venturi tube 341. In this case, the mixed fuel and the water in the venturi tube 341 are supplied to the reformer 330 through the sixth connecting line 386. Since other components and operations of the fuel cell system 400 according to the embodiment are the same as those of the aforementioned fuel cell system 100 according to the above discussed embodiment, detailed description thereof is omitted.

FIG. 6 is a schematic block diagram showing a structure of a fuel cell system according to an embodiment of the present invention. Referring to FIG. 6, a fuel cell system 500 according to the embodiment has basically the same structure as the aforementioned fuel cell system 100 according to the above discussed embodiment. The fuel cell system 500 further includes a heater 460 for supplying heat to the fuel tank 450. When a temperature around the fuel tank 450 decreases less than the boiling point of the fuel, the internal pressure of the fuel tank 450 drops, and the vaporization ability of the fuel also drops. Therefore, in order to prevent the aforementioned problem, the system 500 employs the heater 460.

Here, when the fuel stored in the fuel tank 450 in a liquid state absorbs heat around the tank 450 to be vaporized and discharged, the temperature around the fuel tank 450 may drop less than the boiling point of the fuel. In addition, when the fuel tank 450 is used in winter or in a cold place, the temperature around the fuel tank 450 may also drop less than the boiling point of the fuel. In the embodiment, the heater 460 is constructed with a heat coil 461 for generating heat energy by using electric resistance. In this case, the heat coil 461 is coiled around the outer circumference of the fuel tank 450 in a spiral shape to be contacted with the outer circumference. Therefore, according to the illustrated embodiment of the present invention, when the temperature around the fuel tank 450 drops lower than the boiling point of the fuel, the heat coil 461 is applied with a power to generate heat of a predetermined temperature by using electric resistance, and the heat is transmitted to the fuel tank 450. Accordingly, in the embodiment, when the temperature around the fuel tank 450 drops less than the boiling point of the fuel, the heat is provided to the fuel tank 450 through the heater 460, Therefore, the vaporization ability of the fuel stored in the fuel tank 450 is improved, so that fuel is properly supplied to the reformer 430 and the container 471. Since other components and operations of the fuel cell system 500 according to the embodiment are the same as those of the aforementioned fuel cell system 100 according to the aforementioned embodiment, detailed description thereof is omitted.

FIG. 7 is a schematic block diagram showing a structure of a fuel cell system according to an embodiment of the present invention. Referring to FIG. 7, the fuel cell system 600 according to the embodiment has basically the same structure as the aforementioned fuel cell systems 100 and 200 according to the above discussed embodiments. The fuel cell system 600 further include a vapor-liquid separation layer 560 for preventing the oil layer 579 formed on the surface of the water in the container 571 from flowing backward to the third connecting line 581 connecting the fuel tank 550 and the container 571. Here, when the system 600 is rotated in a state where the fuel accommodated into the fuel tank 550 and the container 571 is completely consumed, the oil layer 579 may flow backward to the third connecting line 581.

In the embodiment, the vapor-liquid separation layer 560 is disposed at a point for connecting the container 571 and the third connecting line 581. The vapor-liquid separation layer 560 has a function of a vapor-liquid separation filter for passing only vapor, not liquid. The vapor-liquid separation layer 560 may be made of a fluorinated resin having hydrophobic and porosity properties. Therefore, according to the embodiment, although the system 600 is rotated in a state where the fuel accommodated into the fuel tank 550 and the container 571 is completely consumed, the oil layer 579 that is made of a liquid organic oil is blocked by the vapor-liquid separation layer 560 and does not flow backward to the third connecting line 581. Accordingly, in the embodiment, the oil layer 579 is prevented from flowing backward to the third connecting line 581, so that the third connecting line 581 is prevented from being contaminated by the organic oil, and the amount of the organic oil is not reduced. Since other components and operations of the fuel cell system 600 according to the embodiment are the same as those of the aforementioned fuel cell system 100 according to the above discussed first embodiment, detailed description thereof is omitted.

As described above, in the embodiments, the polymer electrolyte membrane fuel cell system using a gaseous fuel is exemplified, but not limited thereto, and a polymer electrolyte membrane fuel cell system using a liquid fuel or a direct oxidation membrane fuel cell not using the reformer may be employed.

According to the embodiments of the present invention as described above, the structure for discharging water using a pressure of the gaseous fuel is used. Therefore, a typical pump for supplying the water to the reformer may be unnecessary. Therefore, a compact and lightweight system can be implemented, and noises and electric consumption reduces. In addition, according to the embodiments of the present invention, the separation layer for blocking a contact the gaseous fuel with the water is used. Therefore, the bubble generation due to the fuel is restrained. Accordingly, it is possible to supply the water to the reformer in a corresponding quantity, so that an efficiency of the entire system increases.

Although the exemplary embodiments of the present invention have been described, the present invention is not limited to the embodiments, but may be modified in various forms without departing from the scope of the appended claims, the detailed description, and the accompanying drawings. Therefore, it is natural that such modifications belong to the scope of the present invention.

## Claims

1. A fuel cell system comprising a generator (10), a reformer (30) for generating a reformed gas by reforming gaseous fuel and water and for supplying the reformed gas to the generator (10) and, a fuel tank (50) for storing the gaseous fuel in a liquid state by compressing the gaseous fuel and supplying the gaseous fuel to the reformer (30), **characterised in that** the system further comprises a container (71) of substantially constant volume receiving water to be supplied to the reformer (30) and fuel from the fuel tank (50), the container (71) having a separator (78), positioned between and in contact with fuel and water in the container (71) so as to transmit the pressure of the fuel to the water so that water flows from the container (71) to the reformer (30), wherein the system includes a condenser (20) for condensing steam discharged from the generator (10) into water, said condenser (20) being connected to the container (71) to supply condensed water to the water in the container (71).

2. The fuel cell system of Claim 1, wherein the container (71) comprises a water opening (83), through which the water can flow in or out of the container (71), and wherein the container (71) comprises a fuel opening (81), through which the fuel can flow in or out of the container (71).

3. The fuel cell system of claim 2, wherein the fuel opening (81) is connected to the fuel tank (50).

4. The fuel cell system of any preceding claim, wherein the separator (78) is configured so as to form a layer of a material that floats on water in the container (71).

5. The fuel cell system of any preceding claim, wherein the separator (78) comprises a liquid layer.

6. The fuel cell system of any preceding claim, wherein the separator (78) comprises a liquid material which is substantially not miscible with the fuel nor the water.

7. The fuel cell system of any preceding claim, wherein the separator (78) comprises a liquid material which has a specific gravity of from about 0.5 to about 0.9.

8. The fuel cell system of any of claims 5 to 7, wherein the separator (78) comprises a liquid material comprising at least one oil selected from the group of cottonseed oil, linseed oil, olive oil, canola oil, soybean oil, sunflower oil, corn oil, perilla oil, safflower oil, rice bran oil, high oleic acid safflower oil, and cottonseed stearin oil.

9. The fuel cell system of any preceding claim, wherein the separator (78) comprises a first surface configured to face water in the container (71) and a second surface configured to face fuel in the container (71), wherein a distance between the first surface and the second surface is about 3 mm to about 8 mm.

10. The fuel cell system of any of claims 1 to 4, wherein the separator (78) comprises a substantially flexible film.

11. The fuel cell system of any of claims 4 to 9, including a connecting line (183) for the flow of water out of the container (171) to a reformer (30), a valve (160) in the connecting line (183) and control means (180) configured to close the valve (160) to stop flow through the connecting line (183) to prevent the separator (179) from flowing out of the container (171).

12. The fuel cell system of claim 11, comprising a water level sensor (145), the control means (180) being operable to close the valve (160) in response to a signal from the water level sensor (145).

13. The fuel cell system of claim 11 or claim 12, comprising a tilt sensor (247), the control means (280) being operable to close the valve (260) in response to a signal from the tilt sensor (247).

14. The fuel cell system of any preceding claim, wherein fuel is received in the container (71,171,271).

15. The fuel cell system of claim 4, wherein at least a portion of the fuel in the container (71) is in the gaseous phase.

16. The fuel cell system of claim 4 or 15, wherein the fuel comprises at least one compound selected from the group consisting of methane, ethane, propane, butane, pentane, hexane, heptane, octane, ethylene, propylene, butylene, and acetylene.

17. The fuel cell system of any of claims 4 to 16, wherein the fuel is positioned above the water.

18. A fuel cell system according to any preceding claim, comprising a mixer (340) to mix the gaseous fuel from the fuel tank (350) with the water from the container (371) prior to entry into the reformer (330).

19. A method of controlling the supply of water to a reformer (30,330) in a fuel cell system, the method comprising: providing a container (71,171,271) of substantially constant volume containing water and fuel and separated by a separator (78) between and in contact with the fuel and water in the container (71,171,271) and flowing fuel into the container such that it pushes against the water via the separator to cause the water to flow out of the container to a reformer (30,330), the method further comprising the step of condensing steam discharged from the generator and supplying said condensed water to the water in the container.

## Patentansprüche

1. Brennstoffzellensystem mit einem Generator (10), einem Reformer (30) zur Erzeugung von reformiertem Gas durch Reformieren von gasförmigem Brennstoff und Wasser und für die Zufuhr des reformierten Gases zu dem Generator (10), und einem Brennstoffbehälter (50) zur Lagerung des gasförmigen Brennstoffes in flüssigem Zustand durch Komprimieren des gasförmigen Brennstoffes und Zufuhr des gasförmigen Brennstoffes zu dem Reformer (30), **dadurch gekennzeichnet, dass** das System weiterhin Folgendes aufweist: einen Behälter (71) mit im Wesentlichen konstantem Volumen, der Wasser aufnimmt, das dem Reformer (30) zugeführt wird, sowie Brennstoff aus dem Brennstoffbehälter (50), wobei der Behälter (71) einen Separator (78) besitzt, der zwischen dem Brennstoff und dem Wasser in dem Behälter (71) positioniert und in Kontakt damit ist, um den Druck des Brennstoffes auf das Wasser zu übertragen, so dass das Wasser von dem Behälter (71) zu dem Reformer (30) fließt, wobei das System einen Kondensator (20) zum Kondensieren von Dampf besitzt, der von dem Generator (10) in das Wasser abgeführt wird, wobei der Kondensator (20) mit dem Behälter (71) verbunden ist, um dem Wasser in dem Behälter (71) Kondenswasser zuzuführen.

2. Brennstoffzellensystem nach Anspruch 1, wobei der Behälter (71) eine Wasseröffnung (83) aufweist, durch die Wasser in den Behälter (71) hinein und aus dem Behälter (71) heraus fließen kann, und wobei der Behälter (71) eine Brennstoff-Öffnung (81) besitzt, durch die der Brennstoff in den Behälter (71) hinein und aus dem Behälter (71) heraus fließen kann.

3. Brennstoffzellensystem nach Anspruch 2, wobei die Brennstoff-Öffnung (81) mit dem Brennstoffbehälter (50) verbunden ist.

4. Brennstoffzellensystem nach einem der vorhergehenden Ansprüche, wobei der Separator (78) derart konfiguriert ist, dass eine Materialschicht gebildet wird, die auf dem Wasser in dem Behälter (71) schwimmt.

5. Brennstoffzellensystem nach einem der vorhergehenden Ansprüche, wobei der Separator (78) eine Flüssigkeitsschicht aufweist.

6. Brennstoffzellensystem nach einem der vorhergehenden Ansprüche, wobei der Separator (78) flüssiges Material aufweist, das im Wesentlichen weder mit dem Brennstoff noch mit dem Wasser mischbar ist.

7. Brennstoffzellensystem nach einem der vorhergehenden Ansprüche, wobei der Separator (78) ein flüssiges Material aufweist, das eine bestimmte Schwerkraft von ca. 0,5 bis 0,9 besitzt.

8. Brennstoffzellensystem nach einem der Ansprüche 5 bis 7, wobei der Separator (78) ein flüssiges Material aufweist, das mindestens ein Öl umfasst, das aus der Gruppe der Baumwollsamenöle, Leinsamenöle, Olivenöle, Rapsöle, Sojabohnenöle, Sonnenblumenöle, Maiskeimöle, Perillaöle, Färberdistelöle, Reiskleieöle, Färberdistelöle mit hohem Ölsäuregehalt und Baumwollsamenöle mit Stearin ausgewählt ist.

9. Brennstoffzellensystem nach einem der vorhergehenden Ansprüche, wobei der Separator (78) eine erste Fläche besitzt, die dem Wasser in dem Behälter (71) zugewandt ist, und eine zweite Fläche besitzt, die dem Brennstoff in dem Behälter (71) zugewandt ist, wobei der Abstand zwischen der ersten Fläche und der zweiten Fläche ungefähr 3 mm bis ungefähr 8 mm beträgt.

10. Brennstoffzellensystem nach Anspruch 1 bis 4, wobei der Separator (78) einen im Wesentlichen elastischen Film aufweist.

11. Brennstoffzellensystem nach Anspruch 4 bis 9 mit einer Verbindungsleitung (183) für den Wasserfluss aus dem Behälter (171) zu einem Reformer (30), einem Ventil (160) in der Verbindungsleitung (183) und Steuerelementen (180) zum Verschließen des Ventils (160), um den Durchfluss durch die Verbindungsleitung (183) zu stoppen, um zu verhindern, dass der Separator (78) aus dem Behälter (171) herausfließt.

12. Brennstoffzellensystem nach Anspruch 11 mit einem Wasserstandssensor (145), wobei die Steuerelemente (180) derart bedienbar sind, dass sie das Ventil (160) als Reaktion auf ein Signal von dem Wasserstandssensor (145) schließen.

13. Brennstoffzellensystem nach Anspruch 11 oder 12 mit einem Neigungssensor (247), wobei die Steuerelemente (280) derart bedienbar sind, dass sie das Ventil (260) als Reaktion auf ein Signal von dem Neigungssensor (247) schließen.

14. Brennstoffzellensystem nach dem vorhergehenden Anspruch, wobei der Brennstoff in dem Behälter (71, 171, 271) aufgenommen wird.

15. Brennstoffzellensystem nach Anspruch 4, wobei sich mindestens ein Teil des Brennstoffes in dem Behälter (71) in der gasförmigen Phase befindet.

16. Brennstoffzellensystem nach Anspruch 4 oder 15, wobei der Brennstoff mindestens eine Verbindung aufweist, die aus der Gruppe bestehend aus Methan, Ethan, Propan, Butan, Pentan, Hexan, Heptan, Oktan, Ethylen, Propylen, Butylen und Acetylen ausgewählt ist.

17. Brennstoffzellensystem nach einem der Ansprüche 4 bis 16, wobei der Brennstoff über dem Wasser angeordnet ist.

18. Brennstoffzellensystem nach einem der vorhergehenden Ansprüche mit einem Mischer (340), um den gasförmigen Brennstoff aus dem Brennstoffbehälter (350) vor dem Eintritt in den Reformer (330) mit Wasser aus dem Behälter (371) zu mischen.

19. Verfahren zur Steuerung der Zufuhr von Wasser in einen Reformer (30, 330) in einem Brennstoffzellensystem, wobei das Verfahren Folgendes aufweist : Bereitstellen eines Behälters (71, 171, 271) mit im wesentlichen konstantem Volumen, der Wasser und Brennstoff enthält, und durch einen Separator (78) getrennt ist, welcher zwischen dem Brennstoff und dem Wasser in dem Behälter (71, 171, 271) positioniert und in Kontakt damit ist, und über den Brennstoff in den Behälter fließt, so dass er über den Separator gegen das Wasser drückt, damit das Wasser aus dem Behälter zu einem Reformer (30, 330) fließt, wobei das Verfahren weiterhin den Schritt des Kondensierens von Dampf aufweist, der aus dem Generator abgeführt wird, und das Zuführen des Kondenswassers zu dem Wasser in dem Behälter.

## Revendications

1. Système de pile à combustible comprenant un générateur (10), un reformeur (30) pour produire un gaz reformé en reformant un combustible gazeux et de l'eau et pour distribuer le gaz reformé au générateur (10) et un réservoir à combustible (50) pour stocker le combustible gazeux à l'état liquide en comprimant le combustible gazeux et en distribuant le combustible gazeux jusqu'au reformeur (30), **caractérisé en ce que** le système comprend, en outre, un récipient (71) à volume sensiblement constant recevant de l'eau devant être fournie au reformeur (30) et du combustible depuis le réservoir à combustible (50), le récipient (71) comportant un séparateur (78), positionné entre, et en contact avec, le combustible et l'eau dans le récipient (71) de manière à transmettre la pression du combustible à l'eau de manière que l'eau s'écoule du récipient (71) au reformeur (30), où le système comprend un condensateur (20) pour condenser la vapeur déchargée du générateur (10) en eau, ledit condensateur (20) étant raccordé au récipient (71) pour distribuer l'eau condensée dans l'eau du récipient (71).

2. Système de pile à combustible selon la revendication 1, dans lequel le récipient (71) comprend une ouverture à eau (83), via laquelle l'eau peut s'écouler dans le récipient (71) et en dehors, et où le récipient (71) comprend une ouverture à combustible (81), via laquelle le combustible peut s'écouler dans le récipient (71) et en dehors.

3. Système de pile à combustible selon la revendication 2, dans lequel l'ouverture à combustible (81) est raccordée au réservoir à combustible (50).

4. Système de pile à combustible selon l'une quelconque des revendications précédentes, dans lequel le séparateur (78) est configuré de manière à former une couche d'un matériau qui flotte sur l'eau dans le récipient (71).

5. Système de pile à combustible selon l'une quelconque des revendications précédentes, dans lequel le séparateur (78) comprend une couche de liquide.

6. Système de pile à combustible selon l'une quelconque des revendications précédentes, dans lequel le séparateur (78) comprend une matière liquide qui est sensiblement non miscible avec le combustible ou l'eau.

7. Système de pile à combustible selon l'une quelconque des revendications précédentes, dans lequel le séparateur (78) comprend une matière liquide qui a une densité relative comprise entre environ 0,5 et environ 0,9.

8. Système de pile à combustible selon l'une quelconque des revendications 5 à 7, dans lequel le séparateur (78) comprend une matière liquide comprenant au moins une huile sélectionnée dans le groupe consistant en huile de coton, huile de lin, huile d'olive, huile de colza, huile de soja, huile de tournesol, huile de maïs, huile de périlla, huile de carthame, huile de son de riz, huile de carthame à acide oléique élevé, et huile de stéarine de coton.

9. Système de pile à combustible selon l'une quelconque des revendications précédentes, dans lequel le séparateur (78) comprend une première surface configurée pour être tournée vers l'eau dans le récipient (71) et une deuxième surface configurée pour être tournée vers le combustible dans le récipient (71), où une distance entre la première surface et la deuxième surface est comprise entre environ 3 mm et environ 8 mm.

10. Système de pile à combustible selon l'une quelconque des revendications 1 à 4, dans lequel le séparateur (78) comprend un film sensiblement flexible.

11. Système de pile à combustible selon l'une quelconque des revendications 4 à 9, comprenant une conduite de raccordement (183) pour l'écoulement d'eau hors du récipient (171) jusqu'à un reformeur (30), une vanne (160) dans la conduite de raccordement (183) et un moyen de commande (180) configuré pour fermer la vanne (160) afin d'arrêter l'écoulement via la conduite de raccordement (183) afin d'empêcher que le séparateur (179) s'écoule hors du récipient (171).

12. Système de pile à combustible selon la revendication 11, comprenant un détecteur de niveau d'eau (145), le moyen de commande (180) pouvant être actionné pour fermer la vanne (160) en réponse à un signal provenant du détecteur de niveau d'eau (145).

13. Système de pile à combustible selon la revendication 11 ou la revendication 12, comprenant un capteur d'inclinaison (247), le moyen de commande (280) pouvant être actionné pour fermer la vanne (260) en réponse à un signal provenant du capteur d'inclinaison (247).

14. Système de pile à combustible selon l'une quelconque des revendications précédentes, dans lequel le combustible est reçu dans le récipient (71, 171, 271).

15. Système de pile à combustible selon la revendication 4, dans lequel au moins une partie du combustible dans le récipient (71) est en phase gazeuse.

16. Système de pile à combustible selon la revendication 4 ou 15, dans lequel le combustible comprend au moins un composé sélectionné dans le groupe consistant en méthane, éthane, propane, butane, pentane, hexane, heptane, octane, éthylène, propylène, butylène, et acétylène.

17. Système de pile à combustible selon l'une quelconque des revendications 4 à 16, dans lequel le combustible est positionné au-dessus de l'eau.

18. Système de pile à combustible selon l'une quelconque des revendications précédentes, comprenant un mélangeur (340) pour mélanger le combustible gazeux provenant du réservoir à combustible (350) avec l'eau provenant du récipient (371) avant entrée dans le reformeur (330).

19. Procédé pour commander la distribution d'eau dans un reformeur (30, 330) dans un système de pile à combustible, le procédé comprenant la fourniture d'un récipient (71, 171, 271) à volume sensiblement constant contenant eau et combustible et séparé par un séparateur (78) entre, et en contact avec, le combustible et l'eau dans le récipient (71, 171, 271) et l'écoulement de combustible dans le récipient de manière qu'il pousse contre l'eau via le séparateur pour amener l'eau à s'écouler hors du récipient jusqu'à un reformeur (30, 330), le procédé comprenant, en outre, l'étape de condensation de la vapeur déchargée du générateur et la distribution de ladite eau condensée dans l'eau du récipient.
